# EUROPÄISCHE PATENTANMELDUNG

(11) **EP 0 892 120 A2**
(43) Veröffentlichungstag der Anmeldung: **20.01.1999**
(21) Anmeldenummer: 98111689.0
(22) Anmeldetag: 24.06.1998
(51) Int. Cl.: E04B 1/80, F25D 23/06

(54) **Vakuumisolationspaneel**

(30) Priorität: 25.06.1997 DE 19726945
(71) Anmelder: UVT GmbH, 74918 Angelbachtal-Mi. (DE)
(72) Erfinder: Sautner, Karl-Heinz, 74918 Angelbachtal (DE)
(74) Vertreter: Kammer, Arno, Dipl.-Ing.

(57) **Zusammenfassung**

Es wird ein Vakuumisolationspaneel beschrieben, bei dem in einer dichten Umhüllung (1) Füllmaterial (2) untergebracht wird. Die Umhüllung (1) wird nach Evakuierung verschlossen.

Als Füllmaterial (2) wird Blähglas verwendet.

## Beschreibung

Die Erfindung betrifft ein Vakuumisolationspaneel insbesondere für die Anwendung in Kühlgeräten, mobilen Kühlboxen und Kühlwänden für Kühlhäuser und Kühlfahrzeuge bestehend aus einer gas- und wasserdampfdichten Umhüllung und einem in der Umhüllung untergebrachten Füllmaterial, wobei nach Evakuierung auf einen Unterdruck die Umhüllung verschlossen wird. Derartige Vakuumisolationspaneele sind z. B. aus der Zeitschrift "Die Kälte- und Klimatechnik" 10/1992 Seite 782 bis 786 bekannt. Dort wird Kieselsäure als Füllmaterial zu einer Platte verpreßt und anschließend wird die Platte im Vakuum in eine gas- und wasserdampfdichte Folie eingesiegelt.

Als Füllstoff zur Herstellung von VIP sind bisher nur Glasfaser, offenzellige Kunststoffschäume, Kieselsäure, und entgaster PUR-Schaum aus Altkühlgeräten bekannt. Auch ist es bekannt, Füllmaterial lose in eine Umhüllung einzufüllen und dann die Umhüllung zu evakuieren. Hierdurch erhält das Paneel seine Stabilität.

Die Umhüllungen können aus Metall(-folien), Kunststoffolien oder aus einer Kombination solcher Folien bestehen. Wichtige geforderte Eigenschaften an Vakuumpaneele und somit auch an deren Füllstoffe sind:
- geringe Wärmeleitfähigkeit (a)
- Druckbeständigkeit (b)
- thermische Beständigkeit bzw. möglichst hohe Wärmekapazität (c)
- Formstabilität (d)

Darüberhinaus stellt die Verwendung eines geeigneten Füllmaterials eine wesentliche Grundlage für die gesamten Herstellungskosten eines VIP dar.

Die bekannten Paneele mit einem Füllstoff erfüllen in der Regel nicht alle oben geforderten Eigenschaften optimal, d. h. es mußten bisher häufig Kompromisse eingegangen bzw. ein teilweiser Verzicht auf eine oder mehrere der oben geforderten Eigenschaften hingenommen werden.

So erfüllt z. B. ein Füller aus Glasfaser die Anforderungen a) und c) sehr gut, b) und d) jedoch überhaupt nicht. Ein Füller aus offenzelligem Kunststoffschaum erfüllt die Anforderungen a), b) und d), nicht jedoch c).

Man mußte deshalb bisher
- entweder eine Verschlechterung der Isolationswirkung hinnehmen, wenn a nicht optimal erfüllt war,
- oder eine Verformung der Paneele nach dem Einbau (z. B. in Kühlgeräten) und damit Verformung des gesamten Endprodukts (Kühlgerät) hinnehmen, wenn b nicht optimal erfüllt war
- oder eine Verformung bzw. Zerstörung des Füllmaterials bei zu hoher thermischer Belastung und somit Beeinträchtigung bzw. Zerstörung des gesamten VIP hinnehmen, wenn c nicht optimal erfüllt war
- oder eine eingeschränkte Geometrie und Baugröße hinnehmen, wenn d nicht erfüllt war.

Der Erfindung liegt die Aufgabe zugrunde, ein Vakuumisolationspaneel (VIP) zu schaffen, mit dem man die oben genannten Eigenschaften ganz oder teilweise optimieren sowie eine kostengünstige Herstellung dieser VIP erreichen kann. Diese Aufgabe wird durch die im Anspruch 1 angegebenen Merkmale gelöst. Die Unteransprüche enthalten Weiterbildungen und Ausgestaltungen der Erfindung.

Ein weitere Vorteil dieser Erfindung ist die Möglichkeit der Verwendung von Recyclingmaterial (Altglas) und somit die Einsparung von Rohstoffen.

Blähglas wird üblicherweise aus fein gemahlenem Glasbruch (u. a. durch Verwendung von Altglas) durch Sintern bei Temperaturen zwischen 700 und 900° C hergestellt. Wichtige physikalische Eigenschaften (am Beispiel eines am Markt vorhandenenen Produkts) sind geringe Wärmeleitfähigkeit (ca. 0,07 W/(mK)), Formstablität, thermische Stabilität (bis über 700°C) und geringes Schüttgewicht (ca. 200 kg/m³).

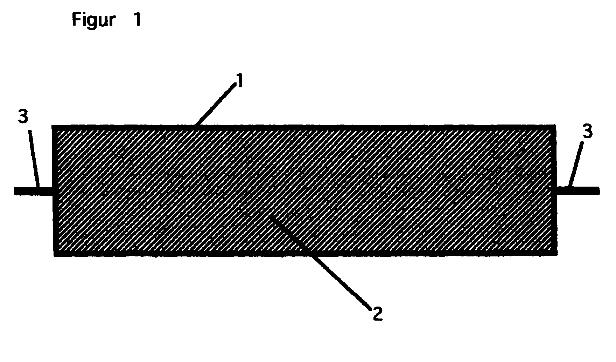

Figur 1 zeigt einen Querschnitt durch ein Vakuumpaneel, wobei 1 die Umhüllung aus Folie, Folienkombination und/oder Metallfilm darstellt. 2 zeigt den Füller in der Umhüllung, die Umhüllungsober- und unterseite sind bei 3 miteinander gasdicht verbunden durch Schweiß- und/ oder Siegelnähte. Der Füller kann nur aus Blähglas bestehen, jedoch auch mit wenigstens einem anderen Füller kombinierbar sein. Der Füller kann loses Material sein, jedoch auch als vorgeformter geometrischer Körper, z. B. als Platte ausgebildet sein.

## Patentansprüche

1. Vakuumisolationspaneel bestehend aus einer gas- und wasserdampfdichten Umhüllung und einem in der Umhüllung untergebrachten Füllmaterial, wobei nach einem Evakuiervorgang die Umhüllung dicht verschlossen wird, dadurch gekennzeichnet, daß dieses Füllmaterial aus Blähglas und/oder Schaumglas besteht.

2. Vakuumisolationspaneel nach Anspruch 1, dadurch gekennzeichnet, daß diese Paneele in Kühlgeräten, mobilen Kühlboxen oder Kühlwänden für Kühlhäuser oder Kühlfahrzeuge zur Anwendung kommen.

3. Vakuumisolationspaneel nach Anspruch 1 oder 2, dadurch gekennzeichnet, daß dieses Füllmaterial aus Blähglas in Kombination mit mindestens einem weiteren Füllmaterial besteht.

4. Vakuumisolationspaneel nach einem der Ansprüche 1 bis 3, dadurch gekennzeichnet, daß dieses Füllmaterial aus Blähglas in loser Schüttung besteht

5. Vakuumisolationspaneel nach einem der Ansprüche 1 bis 3, dadurch gekennzeichnet, daß dieses Füllmaterial aus festen, vorgeformten geometrische Körpern aus Blähglas besteht.

6. Vakuumisolationspaneel nach Anspruch 5, dadurch gekennzeichnet, daß diese Geometrien flache Platten sind.
